# FASCICULE DE BREVET EUROPEEN

(11) **EP 4 528 247 B1**
(45) Date de publication et mention de la délivrance du brevet: **04.03.2026**
(21) Numéro de dépôt: 24198484.8
(22) Date de dépôt: 04.09.2024
(51) Int. Cl.: G01N 1/40

(54) **SYSTÈME DE DÉTERMINATION DE LA TENEUR EN AU MOINS UNE IMPURETÉ DANS UN LIQUIDE CRYOGÉNIQUE**
SYSTEM ZUR BESTIMMUNG DES GEHALTES AN MINDESTENS EINER VERUNREINIGUNG IN EINER KRYOGENEN FLÜSSIGKEIT
SYSTEM FOR DETERMINING THE CONTENT OF AT LEAST ONE IMPURITY IN A CRYOGENIC LIQUID

(30) Priorité: 21.09.2023 FR 2309982
(43) Date de publication de la demande: 26.03.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CRAYSSAC, Frédéric, 75007 PARIS (FR); LE BOT, Patrick, 75007 PARIS (FR); MACHON, Daniel, 75007 PARIS (FR)
(74) Mandataire: Air Liquide

(56) Documents cités:
- US-A1- 2020 191 689
- US-A1- 2022 163 432

## Description

La présente invention se rapporte à l'industrie chimique et concerne un système de détermination de la teneur en au moins une impureté dissoute dans un liquide cryogénique, par exemple prélevé dans un système de séparation des gaz de l'air, ainsi qu'un procédé de détermination correspondant.

Un système de séparation des gaz de l'air comporte des colonnes de distillation à basse et moyenne pression permettant de séparer les différents constituants de l'air. Bien que l'air soit purifié avant son admission dans les colonnes, des impuretés subsistent dans l'air d'alimentation des colonnes et se concentrent notamment dans un vaporiseur d'oxygène dans une des colonnes.

En effet, la plupart de ces impuretés présente un coefficient d'équilibre liquide/vapeur tel que la quasi-totalité de ces impuretés reste présente dans la phase liquide du vaporiseur, une partie infinitésimale des impuretés repartant du vaporiseur dans la phase gazeuse. La teneur en impuretés dans la phase liquide augmente donc au fur et à mesure des vaporisations et finit par s'accumuler sous la forme d'un dépôt liquide ou solide dans la matrice en aluminium du vaporiseur. Des procédés d'adsorption, mis en œuvre avant la distillation, permettent de supprimer dans l'air d'alimentation des colonnes, les hydrocarbures lourds c'est-à-dire à plus de quatre atomes de carbone, ainsi que les hydrocarbures comportant des liaisons insaturées. Les impuretés qui ne sont pas ou peu stoppées par ces procédés d'adsorption sont notamment les hydrocarbures légers et le propane. Les hydrocarbures légers à un ou deux atomes de carbone sont fortement solubles dans l'oxygène, et ne créent donc pas de phase pure pouvant réagir avec l'oxygène dans le vaporiseur. Cependant le propane est relativement peu soluble dans l'oxygène et peut donc créer une phase pure dont le contact avec l'oxygène liquide dans le vaporiseur peut générer une situation explosive notamment lorsque l'énergie dégagée par cette impureté est suffisante pour démarrer la combustion de la matrice du vaporiseur en aluminium.

De plus, même lorsque l'impureté présente dans le vaporiseur n'est pas réactive avec l'oxygène, elle accélère le phénomène d'accumulation de toutes les autres impuretés donc également des impuretés réactives avec l'oxygène. C'est notamment le cas du dioxyde de carbone et du protoxyde d'azote, dont la température de solidification est supérieure à la température opératoire de l'oxygène liquide. Ces impuretés peuvent ne pas être stoppées par les procédés d'adsorption et créer une phase solide dans l'oxygène liquide du vaporiseur, pouvant boucher les canaux de vaporisation du vaporiseur. Ce mécanisme appelé en anglais « dead end boiling » ou « ébullition en cul de sac » accélère la concentration de l'ensemble des impuretés contenues dans le liquide se vaporisant, notamment des hydrocarbures, et augmente donc le risque de combustion de la matrice de vaporisation.

Il est donc nécessaire de surveiller la teneur en impuretés entrant dans les colonnes de distillation et/ou dans le bain d'oxygène du vaporiseur afin d'y maintenir des quantités limites acceptables en impuretés et d'assurer la sécurité de fonctionnement du système de séparation des gaz de l'air. Un système exemplaire d'analyse des traces de contaminants dans un liquide cryogénique est décrit dans le brevet américain US 2020/191689.

Une difficulté à surmonter est que les niveaux d'impuretés à mesurer sont extrêmement bas, compte tenu des très faibles solubilités et coefficients d'équilibre liquide/vapeur de ces impuretés, en particulier pour le dioxyde de carbone et le protoxyde d'azote.

Afin de pouvoir contrôler des quantités limites acceptables en impuretés, il est nécessaire de mesurer des teneurs inférieures à 100ppb (partie par milliard), et préférentiellement comprises entre 10 et 50ppb. Ces mesures peuvent être continues ou s'effectuer à une fréquence permettant une intervention bien avant l'atteinte d'une teneur critique en impuretés.

Actuellement, les techniques permettant de déterminer la teneur en impuretés dans l'air à distiller ou dans l'oxygène du vaporiseur, utilisent des appareils complexes et requièrent une compétence opérationnelle importante. Ces techniques utilisent des analyseurs de gaz uniquement, ce qui nécessite de prélever le liquide cryogénique entrant dans les colonnes de distillation ou dans le vaporiseur, et de le vaporiser dans un équipement spécifique pour pouvoir ensuite l'analyser. Préférentiellement le prélèvement s'effectue en entrée du vaporiseur, ou en sortie du vaporiseur, ou encore entre différents étages de vaporisation le cas échéant, étant donné que le vaporiseur est un point critique du système de séparation des gaz de l'air.

Ces techniques de l'art antérieur comprennent une vaporisation entière du prélèvement avec ses impuretés pour obtenir un gaz à analyser, dans lequel la teneur en impuretés est identique à la teneur en impuretés dans le prélèvement de liquide cryogénique, la vaporisation étant effectuée dans des conditions empêchant une accumulation des impuretés dans le dispositif de prélèvement ou de vaporisation du prélèvement, pour ne pas fausser les mesures de l'analyseur de gaz.

Afin de faciliter la mesure de la teneur en impuretés dans le liquide cryogénique, les inventeurs ont conçu un appareil et un procédé d'analyse de cette teneur, décrits dans les documents FR3066596 et FR3066597. L'appareil permet la vaporisation d'une grande quantité d'un prélèvement de liquide cryogénique à analyser dans une capacité, le gaz ainsi vaporisé étant évacué en circuit ouvert, une quantité résiduelle de liquide cryogénique dans lequel les impuretés du prélèvement se sont concentrées, étant conservée à la fin de cette vaporisation. Puis la capacité est maintenue fermée et la quantité résiduelle de liquide cryogénique est entièrement vaporisée dans la capacité, de sorte à obtenir un gaz avec une teneur en impuretés bien plus importante que celle du prélèvement initial, donc plus facile à mesurer par un analyseur de gaz.

Cette approche innovante nécessite que les impuretés dont on veut mesurer la concentration soient moins volatiles que le liquide cryogénique dans lequel elles sont présentes, mais aussi que la quantité des impuretés s'évaporant pendant la vaporisation en circuit ouvert, soit négligeable par rapport à la quantité des impuretés subsistant dans le liquide cryogénique résiduel. Ces conditions dépendent des valeurs d'équilibre thermodynamique entre les impuretés et leur solvant, qui elles-mêmes dépendent de la température et de la pression de vaporisation. Plus la pression de vaporisation est faible, plus la vaporisation est favorable à la concentration des impuretés dans le liquide cryogénique résiduel. En s'appuyant sur ces valeurs d'équilibre thermodynamique, la concentration des impuretés dans le liquide cryogénique résiduel ne devrait pas poser de problème. En effet selon ces valeurs, lorsque le liquide cryogénique résiduel est de l'oxygène maintenu à 15 bars, la quantité de protoxyde d'azote, ou de dioxyde de carbone, ou de propane, s'échappant en vapeur lors de la vaporisation en circuit ouvert, reste inférieure à 2% de la quantité d'impuretés restant dans le liquide cryogénique.

Cependant, les inventeurs ont constaté que la quantité d'impuretés s'échappant dans la phase gazeuse lors de la vaporisation en circuit ouvert peut en réalité être beaucoup plus importante lorsque le liquide cryogénique vaporisé présente des zones sur-concentrées en impuretés, ou lorsqu'une vaporisation à sec du liquide cryogénique s'effectue sur la paroi de l'appareil qui transmet la chaleur de vaporisation.

Notamment, si cette paroi est surchauffée, l'équilibre thermodynamique est décalé et la quantité d'impuretés s'échappant dans la phase gazeuse est plus importante. Pour éviter une telle surchauffe, la concentration des impuretés peut se faire à pression supérieure à la pression atmosphérique, mais cela n'empêche pas la formation de zones sur-concentrées en impuretés dans le liquide.

Il est à noter que les techniques de l'art antérieur proposant une vaporisation totale d'un prélèvement de liquide cryogénique ne permettent pas de vaporiser le liquide cryogénique à la température de bulle sans que celui-ci ne vaporise localement à sec sur une partie de la paroi chauffante du dispositif de vaporisation, et n'entraîne un dépôt d'impuretés sur cette paroi chauffante, qui charge en impuretés le gaz formé par vaporisation.

Enfin une autre difficulté, avec l'approche proposée par les inventeurs, est que pour concentrer de manière significative les impuretés dans le liquide cryogénique résiduel, avec un facteur de concentration supérieur ou égal à 100, il faut vaporiser en circuit ouvert 99% du prélèvement de liquide cryogénique, ce qui rend difficile de ne pas avoir de paroi chauffante vaporisant à sec le liquide cryogénique pendant cette étape de vaporisation en circuit ouvert. Cela est d'autant plus difficile que pour assurer la sécurité du système de séparation des gaz de l'air, on contraint la durée d'un cycle d'analyse à être inférieure à une heure. En effet l'appareil d'analyse proposé par les inventeurs fonctionne par cycles pendant lesquels la capacité dans laquelle le prélèvement doit être vaporisé, doit après vaporisation de tout le liquide cryogénique résiduel et son envoi à un analyseur de gaz, être refroidie pour accueillir un autre prélèvement.

La présente invention vise à remédier au moins en partie aux inconvénients précités en fournissant un système et un procédé de détermination de la teneur en au moins une impureté dans un liquide cryogénique, ainsi qu'un système de séparation des gaz de l'air, qui permettent de concentrer l'impureté dans une partie du liquide avant vaporisation de cette partie de liquide et envoi de la vapeur ainsi produite dans un analyseur de gaz, avec un facteur de concentration qui ne soit pas faussé par une vaporisation trop importante des impuretés lors de la concentration de l'impureté dans la partie du liquide cryogénique.

A cette fin, l'invention propose un système de détermination de la teneur en au moins une impureté dissoute dans un liquide cryogénique, l'au moins une impureté étant moins volatile que le liquide cryogénique, comportant :
- une capacité apte à recevoir un volume initial du liquide cryogénique,
- des moyens de vaporisation du volume initial de liquide cryogénique jusqu'à obtenir un volume de liquide cryogénique résiduel dans lequel l'impureté est concentrée, les moyens de vaporisation étant disposés en partie inférieure de la capacité et comprenant une surface de chauffage apte à vaporiser le liquide cryogénique, et
- des moyens de détermination de la teneur en l'impureté du liquide cryogénique résiduel,
le système de détermination étant caractérisé en ce que les moyens de vaporisation comprennent au moins un conduit d'admission du liquide cryogénique et une pluralité de conduits d'évacuation du liquide cryogénique, les moyens de vaporisation étant aptes à produire un effet thermosiphon entre le conduit d'admission et la pluralité de conduits d'évacuation, la surface de chauffage comprenant les surfaces internes des conduits d'évacuation.

Autrement dit, les moyens de vaporisation sont configurés pour maintenir mouillée ladite surface de chauffage par le volume de liquide cryogénique résiduel.

Grâce à l'invention, la vaporisation du volume initial de liquide cryogénique permettant de concentrer l'impureté dans le volume de liquide cryogénique résiduel, se fait sans que l'impureté ne s'échappe de manière non négligeable dans la phase gazeuse lors de cette vaporisation.

En effet, la surface chauffante des moyens de vaporisation qui permet cette vaporisation est entièrement noyée ou entièrement mouillée par le volume de liquide cryogénique résiduel. Il n'y a donc pas de vaporisation à sec du liquide cryogénique pouvant créer des dépôts sur cette surface chauffante. Celle-ci est définie comme permettant la vaporisation du liquide cryogénique, donc dégageant une chaleur permettant cette vaporisation. D'autres surfaces des moyens de vaporisation peuvent être relativement chaudes par rapport au liquide cryogénique sans permettre une vaporisation de celui-ci. La surface chauffante est par exemple aménagée en partie inférieure de la capacité.

L'effet thermosiphon, produit par les moyens de vaporisation, permet d'agiter le liquide cryogénique et donc d'éviter la formation de zones sur-concentrées en impuretés dans le liquide cryogénique, ce qui évite également une vaporisation trop importante de ces impuretés.

Dans l'invention, les conduits d'évacuation sont ceux qui permettent la vaporisation du liquide cryogénique, leur surface interne chauffant le liquide cryogénique à une température permettant cette vaporisation. Les moyens de vaporisation sont par exemple agencés dans une partie inférieure de la capacité de sorte à noyer au moins en partie les conduits d'évacuation dans le volume de liquide cryogénique résiduel par l'effet de la gravité, la surface interne des conduits d'évacuation même non noyée par le liquide cryogénique résiduel, restant mouillée par la circulation de liquide cryogénique résiduel dans les conduits d'évacuation du fait de l'effet thermosiphon.

Dans un mode de réalisation, les conduits d'évacuation entourent par exemple le conduit d'admission. De plus, les conduits d'évacuation sont de préférence plus petit diamètre que le conduit d'admission. En distribuant ainsi le liquide cryogénique dans des conduits d'évacuation de petit diamètre, on facilite son évaporation et le maintien mouillé de leur surface chauffante. Les conduits d'admission et d'évacuation ont préférentiellement une section circulaire et les conduits d'admission sont de préférence angulairement uniformément répartis autour du conduit d'admission.

Les moyens de vaporisation comportent par exemple un corps thermiquement conducteur en forme globale de cylindre évidé dans sa hauteur par les conduits d'admission et d'évacuation, qui débouchent sur une face du corps délimitant une partie basse de la capacité.

La partie basse de la capacité forme par exemple une portion de la partie inférieure de la capacité, de même surface que la face du corps, correspondant à une base de sa forme cylindrique. Cette face est donc plane si l'on fait abstraction des orifices des conduits débouchant sur cette face. Celle-ci affleure par exemple de la partie inférieure de la capacité, afin de permettre aux moyens d'évaporation de recueillir par gravité tout le volume de liquide cryogénique résiduel, formant par exemple un pour cent ou moins d'un pour cent du volume initial de liquide cryogénique. Les conduits sont donc disposés verticalement par rapport au sol, la face délimitant la partie basse de la capacité étant disposée horizontalement.

Le corps thermiquement conducteur est un bon conducteur thermique, par exemple en cuivre ou en aluminium et formant une pièce d'un seul tenant de préférence. La surface de ce corps est par exemple lisse ou texturée, notamment les surfaces internes des conduits d'évacuation présentent par exemple une surface qui améliore le coefficient d'échange en vaporisation et/ou le mouillage de la paroi de par sa rugosité, sa géométrie de texturation, la présence de micro-ailettes ou autres moyens.

De préférence, le corps comporte une chemise thermiquement isolante disposée entre le conduit d'admission et les conduits d'évacuation. Ainsi le liquide cryogénique dans le conduit d'admission reste assez froid pour ne pas y vaporiser et former des dépôts sur la surface interne du conduit d'admission. Cette chemise isolante est par exemple en polytétrafluoroéthylène (encore appelé « Téflon^{®} »). Les moyens de vaporisation comprennent notamment au moins un organe de chauffage électrique disposé dans un évidement du corps proximal aux conduits d'évacuation. Cet organe de chauffage est par exemple une résistance chauffante ou une cartouche chauffante, disposée entre le conduit d'admission et les conduits d'évacuation, ou autour des conduits d'évacuation.

Préférentiellement, les moyens de vaporisation comprennent plusieurs organes de chauffage électrique sous forme de cartouches chauffantes, le corps comportant des espaces disposés autour des conduits d'évacuation et logeant les cartouches chauffantes, les espaces étant non débouchant sur la face du corps délimitant la partie basse de la capacité. Ces espaces s'étendent parallèlement aux conduits d'évacuation, à distance de ceux-ci dans le corps thermiquement conducteur, mais assez proches pour maintenir les surfaces internes des conduits d'évacuation à une température permettant la vaporisation du liquide cryogénique. Ils sont de préférence disposés uniformément angulairement autour des conduits d'évacuation.

Les espaces sont par exemple séparés par des évidements sur la circonférence du corps, sur au moins une partie de la hauteur du corps. Ces évidements limitent la masse du corps à chauffer par les cartouches chauffantes lors de la vaporisation du liquide cryogénique, mais également la masse du corps à refroidir lors d'une étape ultérieure visant à amener à une température de remplissage, les parois de la capacité. Cette étape ultérieure est nécessaire pour effectuer une nouvelle détermination de la teneur en impureté dans un nouveau volume initial de liquide cryogénique, qui doit pouvoir être évalué de manière précise lorsqu'il remplit la capacité.

Les évidements entre les espaces logeant les cartouches chauffantes donnent par exemple une forme de barillet au corps en forme globale de cylindre, en s'ouvrant sur la paroi cylindrique externe du corps. Ils permettent une diminution du coût du système de détermination selon l'invention.

Le corps comporte une face opposée à la face délimitant la partie basse de la capacité et les moyens de vaporisation comprennent notamment un collecteur disposé sur la face opposée, le collecteur reliant fluidiquement le conduit d'admission avec les conduits d'évacuation. Ce collecteur est par exemple une pièce en cuivre rapportée sur la face opposée du corps, comportant une chambre de circulation de fluide. Le collecteur étant disposé verticalement sous le corps, il est toujours rempli de liquide cryogénique résiduel et ne permet donc pas la formation de dépôt d'impuretés.

Afin de refroidir la capacité entre deux étapes de vaporisation de deux déterminations distinctes selon l'invention, une enveloppe entoure les moyens de vaporisation, l'enveloppe étant configurée pour contenir un liquide de refroidissement venant au contact des moyens de vaporisation. Bien sûr d'autres moyens de refroidissement sont envisageables.

L'enveloppe est par exemple une enveloppe annulaire entourant au moins la partie inférieure de la capacité, celle-ci étant par exemple une cuve cylindrique.

Préférentiellement, la face opposée débouche hors de l'enveloppe, les conduits d'admission et d'évacuation s'étendant depuis la face délimitant la partie basse de la capacité, au travers de l'enveloppe. Ainsi l'alimentation du ou des organes de chauffage est facilitée. La face opposée comporte par exemple des orifices d'insertion des cartouches chauffantes dans les espaces. La mise en place et le remplacement de ces cartouches sont ainsi également facilités.

L'invention a aussi pour objet un système de séparation des gaz de l'air par distillation cryogénique comportant un système de détermination de la teneur en au moins une impureté dissoute dans un liquide cryogénique selon l'invention, des moyens de prélèvement de fluide circulant dans le système de séparation, des moyens de liquéfaction du fluide prélevé si celui-ci est gazeux, et des moyens d'envoi du fluide prélevé éventuellement liquéfié, dans la capacité pour déterminer sa teneur en l'impureté.

Bien entendu le système et le procédé de détermination de la teneur en au moins une impureté dissoute dans un liquide cryogénique l'invention sont applicables à d'autres systèmes, par exemple à un système de séparation d'un autre type de gaz, dont on voudrait par exemple séparer le dioxyde de carbone.

L'invention concerne également un procédé de détermination de la teneur en au moins une impureté dissoute dans un liquide cryogénique, l'au moins une impureté étant moins volatile que le liquide cryogénique, utilisant le système de détermination de la teneur en au moins une impureté selon l'invention et comportant des étapes de :
- remplissage de la capacité avec le volume initial de liquide cryogénique, maintenu à une pression et une température de remplissage interdisant une vaporisation du liquide cryogénique lors de cette étape de remplissage,
- vaporisation du liquide cryogénique jusqu'à obtention du volume de liquide cryogénique résiduel par les moyens de vaporisation amenant le liquide cryogénique à sa température de vaporisation à la pression du liquide cryogénique lors de cette étape de vaporisation, cette pression étant inférieure ou égale à la pression de remplissage, le gaz issu de la vaporisation étant évacué de la capacité, et
- détermination de la teneur en l'impureté dans le liquide cryogénique résiduel. La température de remplissage et la pression de remplissage sont comprises dans des intervalles respectivement de température et de pression correspondant à un état liquide de l'élément ou du composé formant le liquide cryogénique. Celui-ci est de l'air à l'état liquide ou de l'oxygène à l'état liquide, suivant l'endroit où le liquide cryogénique a été prélevé dans le système de séparation des gaz de l'air selon l'invention. Ce prélèvement est en effet par exemple effectué en entrée des colonnes de distillation du système de séparation des gaz de l'air, ou bien en entrée d'un vaporiseur d'oxygène dans une de ces colonnes, ou en sortie du vaporiseur d'oxygène, ou encore entre différents étages de vaporisation le cas échéant.

L'étape de vaporisation s'effectue à pression atmosphérique ou sous vide contrôlé à travers un système de production de vide tel qu'une pompe à vide ou un éjecteur. Par exemple, la pression au sein de la capacité pendant l'étape de vaporisation est amenée jusqu'à une valeur comprise entre 0,2 bars et 0,3 bars et préférentiellement égale à 0,2 bars. Cela permet d'abaisser la température de vaporisation et par conséquent, de diminuer encore plus les coefficients d'équilibre liquide/vapeur. De plus cela augmente l'écart de température entre la surface de chauffage et le liquide cryogénique ce qui permet de diminuer la durée de l'étape de vaporisation.

La quantité de liquide cryogénique vaporisée pendant l'étape de vaporisation est contrôlée de sorte à connaître précisément le facteur de concentration correspondant au rapport entre le volume initial de liquide cryogénique et le volume de liquide cryogénique résiduel. Cela peut se faire en surveillant la durée de l'étape de vaporisation ainsi que les paramètres de température et de pression lors de cette étape de vaporisation.

Ensuite, l'étape de détermination comporte un prélèvement du liquide cryogénique résiduel puis la vaporisation du liquide prélevé en un gaz, ou bien la vaporisation de tout le liquide cryogénique résiduel en un gaz, puis l'envoi du gaz obtenu par vaporisation du liquide prélevé ou de tout le liquide cryogénique résiduel, dans un analyseur de gaz. Ainsi l'analyseur de gaz doit détecter une teneur concentrée en impureté et n'a donc pas besoin d'être très précis et très coûteux.

Afin de contrôler de manière rapprochée la teneur en impureté du liquide cryogénique dans le système de séparation des gaz selon l'invention, le procédé de détermination selon l'invention comporte une étape de vidange de la capacité, suivie d'une étape de refroidissement de la capacité par introduction dans l'enveloppe du système de détermination, d'un liquide à une température inférieure ou égale à la température de remplissage du liquide cryogénique. L'étape de vidange suit le prélèvement du liquide cryogénique résiduel, ou bien l'envoi du gaz obtenu par vaporisation de tout le liquide cryogénique résiduel, de sorte à ne pas perturber la détermination de la teneur en impureté effectuée par l'analyseur de gaz. Une fois refroidie, la capacité peut accueillir un nouveau volume initial de liquide cryogénique prélevé dans le système de séparation des gaz de l'air, pour en effectuer une nouvelle détermination de la teneur en impureté.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig 1] représente des étapes d'un procédé de détermination de la teneur en au moins une impureté dissoute dans un liquide cryogénique selon l'invention, dans un mode de réalisation de l'invention,
[Fig 2] représente un système de détermination de la teneur en au moins une impureté dissoute dans un liquide cryogénique selon l'invention, dans un mode de réalisation de l'invention, le système comportant notamment une capacité et des moyens de vaporisation représentés en coupe en partie basse de la capacité,
[Fig 3] représente en perspective un élément des moyens de vaporisation représentés sur la figure 2,
[Fig 4] est une vue en perspective d'une coupe de l'élément de la figure 3, et
[Fig 5] représente des étapes d'un procédé de détermination de la teneur en au moins une impureté dissoute dans un liquide cryogénique selon l'invention, dans une variante du mode de réalisation de l'invention représenté figure 1.

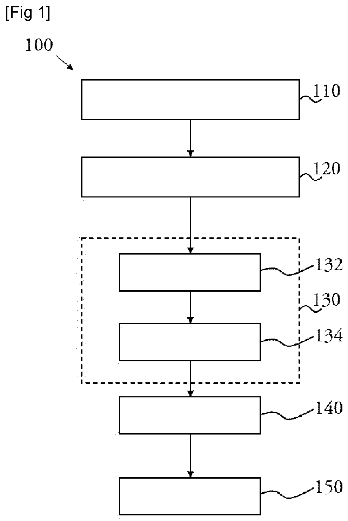

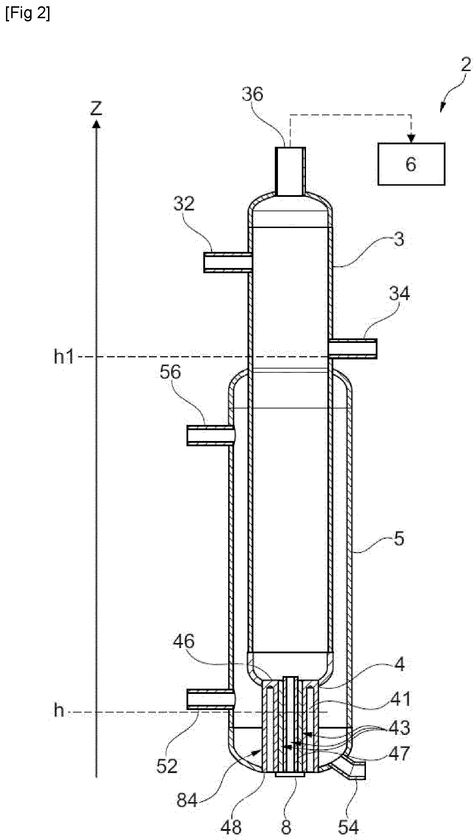

Selon un mode de réalisation de l'invention représenté figure 1, un procédé de détermination 100 selon l'invention de la teneur en au moins une impureté dissoute dans un liquide cryogénique, est mis en œuvre par un système 2 de détermination selon l'invention de la teneur en au moins une impureté dissoute dans un liquide cryogénique représenté figure 2, ce système 2 faisant partie d'un système de séparation des gaz de l'air par distillation cryogénique selon l'invention.

L'au moins une impureté dont la teneur est déterminée est par exemple du propane. Les teneurs d'autres impuretés que le propane dans le liquide cryogénique sont bien sûr également préférentiellement déterminées par le procédé de détermination 100, le système de détermination 2 permettant ces déterminations multiples. Les impuretés déterminées dans ce mode de réalisation de l'invention, sont moins volatiles que le liquide cryogénique.

Ce système de séparation des gaz de l'air comporte des moyens de prélèvement de fluide circulant dans le système de séparation. Dans ce mode de réalisation de l'invention, on suppose que ces moyens de prélèvement prélèvent de l'oxygène liquide en entrée d'un vaporiseur d'oxygène du système de séparation des gaz, ce vaporiseur d'oxygène étant disposé dans une colonne distillation du système de séparation des gaz. L'oxygène liquide ainsi prélevé est envoyé dans le système 2 de détermination.

Celui-ci comporte une capacité 3 sous forme d'une cuve cylindrique, apte à contenir de l'oxygène liquide, et disposée verticalement sur des pieds non représentés. La capacité 3 comporte une entrée 32 de liquide, une sortie 34 de liquide et une sortie 36 de gaz.

L'oxygène liquide prélevé dans le système de séparation est envoyé dans la capacité 3, par l'entrée 32 de liquide sur la capacité 3, lors d'une première étape 110 du procédé de détermination 100, qui est une étape de remplissage de la capacité 3 avec un volume initial de liquide cryogénique c'est-à-dire ici d'oxygène liquide.

Ce volume initial de liquide cryogénique est prédéterminé. Afin de l'obtenir précisément, la capacité 3 est remplie jusqu'à ce que le liquide cryogénique déborde de la capacité 3 par la sortie de liquide 34, dont la position sur la capacité 3 est déterminée de sorte à ce que la capacité 3 soit remplie du volume initial prédéterminé de liquide cryogénique lorsque celui-ci atteint la sortie de liquide 34. La hauteur du liquide cryogénique dans la capacité 3 est alors h1. Cette hauteur est mesurée verticalement par rapport au sol selon un axe vertical Z.

Lors de l'étape 110 de remplissage, la pression et la température du liquide cryogénique interdisent la vaporisation de celui-ci. La température du liquide cryogénique est notamment inférieure à sa température de vaporisation à la pression à laquelle il est soumis lors de cette étape.

L'étape suivante du procédé de détermination 100 est une étape de vaporisation 120 du liquide cryogénique jusqu'à obtention d'un volume de liquide cryogénique résiduel. Dans cette étape, l'entrée 32 et la sortie 34 de liquide sur la capacité 3 sont fermées, tandis qu'une sortie 36 de gaz, disposée au sommet de la capacité 3, est ouverte. En effet le liquide cryogénique transformé en vapeur est évacué lors de cette étape de vaporisation 120, par la sortie 36 de gaz.

Cette vaporisation est effectuée par des moyens de vaporisation 84 disposés en partie inférieure de la capacité 3, qui amènent le liquide cryogénique à sa température de vaporisation, la pression de vaporisation dans la capacité 3 étant tirée sous vide jusqu'à une pression d'environ 0,2 bar absolue. Grâce à cette faible pression, la température de vaporisation (ou température de bulle) est plus basse qu'à pression atmosphérique, ce qui diminue la durée de l'étape de vaporisation 120. De plus cette faible pression diminue les coefficients d'équilibre liquide/vapeur, évitant de laisser échapper une quantité importante d'impuretés dans la phase gazeuse.

L'étape de vaporisation 120 permet de concentrer les impuretés présentes dans le volume initial de liquide cryogénique, dans un volume de liquide cryogénique résiduel conservé à la fin de l'étape de vaporisation 120. Ce volume de liquide cryogénique résiduel est prédéterminé en contrôlant la quantité de gaz vaporisé lors de cette étape de vaporisation 120, ou bien en contrôlant la durée de cette étape et les paramètres de température et de pression dans la capacité 3 pendant cette étape de vaporisation 120, ou encore en mesurant une variation du niveau de liquide et/ou de masse dans la capacité 3.

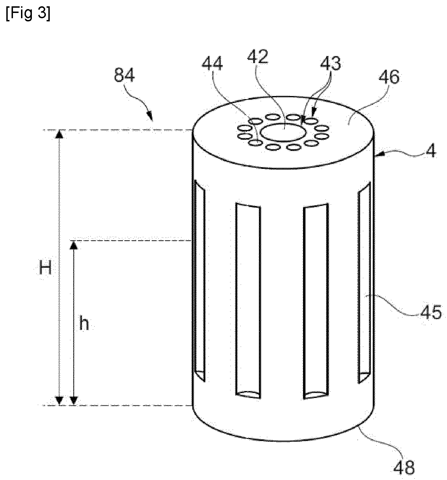

De cette manière, le facteur de concentration des impuretés dans le volume de liquide cryogénique résiduel est déterminé avec précision comme le rapport entre le volume initial de liquide cryogénique et le volume de liquide cryogénique résiduel. A titre indicatif, dans ce mode de réalisation de l'invention, la capacité 3 a une contenance de 1,3 litres et le volume initial de liquide cryogénique est de 0,8 litre. Les moyens de vaporisation 84 sont plus particulièrement visibles sur la figure 3. Ils comportent un corps 4 en cuivre, globalement en forme d'un cylindre de hauteur H. Le corps 4 est disposé selon cette hauteur H verticalement en partie inférieure de la capacité 3, de sorte à ce qu'une face 46 du corps correspondant à une base du cylindre, soit disposée horizontalement et forme une partie basse de la capacité 3. Autrement dit le fond de la cuve cylindrique formant la capacité 3 est constitué en partie par la face 46 du corps 4, qui affleure par rapport aux parois en aluminium de la cuve cylindrique.

Une face opposée 48 du corps 4 correspondant à l'autre base du cylindre, est donc disposée horizontalement de façon proximale au sol par rapport à la face 46 formant la partie basse de la capacité 3.

Le corps 4 est traversé sur sa hauteur par des conduits 43 disposés verticalement, à savoir un conduit d'admission 42, au centre du corps 4, et des conduits d'évacuation 44 entourant le conduit d'admission 42. Les conduits d'évacuation 44 sont de plus petit diamètre que le conduit d'admission 42. Un collecteur 8 en cuivre est rapporté sur la face opposée 48 de sorte à faire communiquer fluidiquement le conduit d'admission 42 et les conduits d'évacuation 44. Le collecteur 8 fait partie des moyens de vaporisation 84.

Bien entendu la partie inférieure de la capacité 3 et les moyens de vaporisation 84 forment des moyens étanches de retenue du liquide cryogénique.

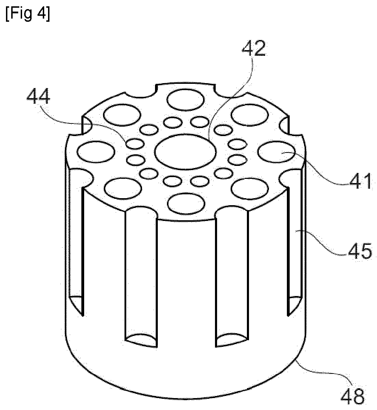

Les moyens de vaporisation 84 comportent également des cartouches chauffantes logées dans des espaces 41 (visibles figure 4) disposés dans le corps 4 autour des conduits d'évacuation 44. Ces espaces 41 s'étendent parallèlement aux conduits d'évacuation 44 dans le corps 4, sans déboucher sur la face 46 formant la partie basse de la capacité 3. Ils débouchent cependant sur la face opposée 48 afin de permettre l'insertion des cartouches chauffantes dans ces cavités 41 ainsi que l'alimentation électrique de ces cartouches chauffantes.

Des évidements 45 sous forme de rainures, creusent la surface cylindrique du corps 4 entre les espaces 41, afin notamment d'augmenter la surface d'échange thermique entre le corps 4 et un liquide de refroidissement destiné à circuler dans une enveloppe 5, entourant la moitié inférieure de la capacité 3 et notamment une partie des moyens de vaporisation 84. Plus précisément l'enveloppe 5 prend la forme d'une enveloppe annulaire dont un premier bord circulaire entoure le corps 4 en bordant la face opposée 48 et dont un deuxième bord circulaire entoure la capacité 3 légèrement au-dessous de la sortie 34 de liquide sur la capacité 3. L'utilité de cette enveloppe 5 sera décrite plus loin.

Les moyens de vaporisation 84 fonctionnent comme un vaporiseur à bain avec un effet de thermosiphon dans les conduits d'évacuation 44. En effet, lors de l'étape de vaporisation 120, les cartouches chauffantes sont alimentées, et amènent la température du liquide cryogénique présent dans les conduits d'évacuation 44 à sa température de vaporisation, laissant échapper l'oxygène vaporisé avec très peu d'impuretés vers la sortie 36 de gaz. Une circulation se crée du fait des flux thermiques, le liquide cryogénique circulant dans le conduit d'admission 42 depuis la face 46 vers la face opposée 48 du corps 4, puis parcourant le collecteur 8 pour alimenter en liquide cryogénique les conduits d'évacuation 44.

Cette circulation permet une bonne agitation et une bonne homogénéité du liquide cryogénique dans les moyens de vaporisation 84 et notamment au niveau de sa surface chauffante formée par les surfaces internes des conduits d'évacuation 44. Les moyens de vaporisation 84 sont configurés de sorte à ce que cette surface chauffante soit encore noyée dans le liquide cryogénique ou mouillée par celui-ci à la fin de l'étape d'évaporation 120, lorsque le volume de liquide cryogénique non vaporisé atteint le volume de liquide cryogénique résiduel, prédéterminé. A titre indicatif, dans ce mode de réalisation de l'invention, le corps 4 a une hauteur H de 7 mm (millimètres), et la hauteur h atteinte par le volume de liquide cryogénique résiduel dans la capacité n'est pas inférieure à 50% de la hauteur H du corps 4. La circulation opérée par effet de thermosiphon dans les conduits d'évacuation 44 permet ainsi de conserver leurs surfaces internes mouillées.

De cette manière, la surface chauffante, qui est une surface de vaporisation, transmet la chaleur de vaporisation sans vaporiser à sec même localement. Il n'y a pas d'interface liquide / vapeur sur la surface chauffante puisque celle-ci est entièrement mouillée par le liquide cryogénique. Il ne peut pas s'y former de dépôts d'impuretés et la vapeur s'échappe à l'équilibre thermodynamique avec une quantité d'impuretés négligeable par rapport à la quantité d'impuretés restantes dans la phase liquide.

Afin de ne pas transmettre une chaleur de vaporisation au liquide cryogénique dans le conduit d'admission 42, la surface interne de celui-ci est recouverte d'une chemise 47 thermiquement isolante, par exemple en Téflon^{®}.

Grâce aux cartouches chauffantes et à la bonne conductivité du corps 4, le flux thermique dans les moyens de vaporisation est contrôlé ce qui permet de maîtriser la température de la surface chauffante. Notamment le corps 4 permet par sa matière d'homogénéiser la température des surfaces internes des conduits d'évacuation 44.

Ceux-ci ont une section circulaire afin de favoriser un bon mouillage de leurs surfaces internes, qui sont lisses ou texturées, par exemple poreuses ou présentant des ailettes afin d'améliorer le coefficient d'échange, augmenter le flux thermique et diminuer la durée de cette étape de vaporisation 120. La basse pression appliquée dans la capacité 3 permet notamment d'augmenter l'écart de température entre la température de la surface chauffante et la température de vaporisation du liquide sans risquer de laisser échapper une trop grande quantité d'impuretés dans la phase gazeuse.

La configuration du corps 4 et notamment la disposition de ses conduits 43, permet d'avoir une surface chauffante toujours mouillée de grande dimension bien que le volume de liquide cryogénique résiduel soit très petit.

A titre indicatif, la puissance thermique de ces moyens de vaporisation 84 permet de vaporiser 99% du volume initial de liquide cryogénique, en moins de 15 minutes. A la fin de l'étape de vaporisation 120, la sortie 36 de gaz est fermée, la capacité étant isolée et contenant le volume de liquide cryogénique résiduel, prédéterminé. L'étape suivante est alors une étape 130 de détermination de la teneur en impureté du liquide cryogénique résiduel.

Cette étape 130 de détermination comporte la vaporisation 132 de tout le volume de liquide cryogénique résiduel, dans la capacité 3 maintenue fermée, puis l'envoi 134 du gaz ainsi vaporisé et concentré en impuretés, dans un analyseur de gaz 6 (représenté figure 2). Celui-ci détermine la teneur en propane du gaz, puis cette teneur est divisée par le facteur de concentration pour déterminer la teneur en propane dans l'oxygène liquide prélevé dans le système de séparation des gaz de l'air. Bien sûr les teneurs d'autres types d'impuretés peuvent également être déterminées dans cette étape 130 de détermination, de la même façon, notamment la teneur en protoxyde d'azote et la teneur en dioxyde de carbone dans l'oxygène liquide prélevé dans le système de séparation des gaz de l'air.

L'étape suivante est une étape de vidange 140 de la capacité 3, par exemple en envoyant un gaz neutre dépourvu d'impuretés dans la capacité 3. En variante, le gaz restant dans la capacité est tiré sous vide par un éjecteur ou une pompe à vide. Puis la capacité 3 est refroidie lors d'une étape 150 de refroidissement, lors de laquelle un liquide à une température inférieure ou égale à la température de remplissage du liquide cryogénique, est envoyé dans l'enveloppe 5 par une entrée 52 de liquide dont l'enveloppe 5 est pourvue dans sa partie inférieure. Ce liquide est par exemple de l'oxygène liquide. Une sortie 56 de gaz dans une partie supérieure de l'enveloppe permet de libérer une phase gazeuse produite par évaporation du liquide dans l'enveloppe 5 au contact de la paroi chaude de la capacité 3.

Puis le liquide de refroidissement est évacué de l'enveloppe 5 par une sortie 54 située en partie basse de l'enveloppe 5, et le système de détermination 2 est prêt pour une nouvelle mise en œuvre du procédé de détermination 100.

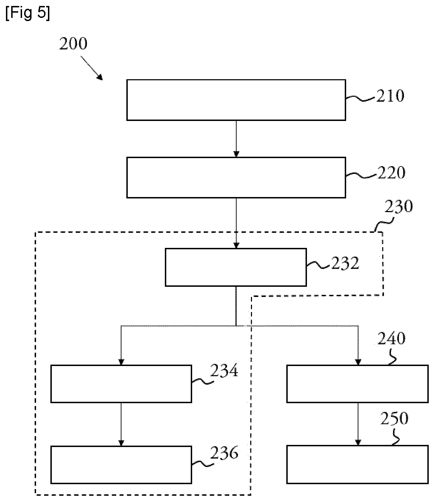

Une variante du procédé de détermination 100 selon l'invention est maintenant présentée en relation avec la figure 5, montrant les étapes d'un procédé de détermination 200 selon l'invention.

Le procédé de détermination 200 selon l'invention comporte des étapes 210 de remplissage de la capacité 3 et 220 de vaporisation du liquide cryogénique, qui sont identiques aux étapes 110 de remplissage et respectivement 120 de vaporisation décrites précédemment.

Dans cette variante, lors d'une étape suivante 230 de détermination de la teneur en impureté du liquide cryogénique résiduel, on ne vaporise pas tout le volume de liquide cryogénique résiduel, mais on prélève 232 un volume prédéterminé de ce volume de liquide cryogénique résiduel, on le vaporise 234 entièrement et on l'envoie 236 dans l'analyseur de gaz 6. Celui-ci en détermine la teneur en impureté de la même manière que dans l'étape 130 de détermination.

Cette variante permet de réaliser une étape de vidange 240 de la capacité 3, en parallèle de la vaporisation du prélèvement de liquide cryogénique dans la capacité distincte. Lors de cette étape de vidange 240, le liquide cryogénique restant dans la capacité 3 est par exemple vaporisé et évacué par la sortie 36 de gaz sur la capacité 3.

Puis la capacité 3 est refroidie lors d'une étape 250 de refroidissement, identique à l'étape 150 de refroidissement du procédé de détermination 100. Une fois le liquide de refroidissement évacué de l'enveloppe 5, le système de détermination 2 est alors prêt pour une nouvelle mise en œuvre du procédé de détermination 200. L'invention est décrite dans le contexte d'un liquide cryogénique provenant de la séparation d'air, tel que l'oxygène, l'azote ou l'argon. Il va de soi que l'invention s'applique à n'importe quel liquide cryogénique, par exemple le dioxyde de carbone, le monoxyde de carbone, l'hydrogène, l'hélium, le méthane, le krypton, le xénon, le néon.

Bien sûr, l'invention n'est pas limitée aux exemples qui viennent d'être décrits et de nombreux aménagements peuvent être apportés à ces exemples sans sortir du cadre de l'invention. Notamment les caractéristiques des différentes variantes de réalisation de l'invention envisagées dans cette demande, peuvent être combinées pour réaliser l'invention, dans la mesure où ces variantes ne sont pas incompatibles entre elles.

## Revendications

1. Système de détermination (2) de la teneur en au moins une impureté dissoute dans un liquide cryogénique, l'au moins une impureté étant moins volatile que le liquide cryogénique, comportant :
• une capacité (3) apte à recevoir un volume initial du liquide cryogénique,
• des moyens de vaporisation (84) du volume initial de liquide cryogénique jusqu'à obtenir un volume de liquide cryogénique résiduel dans lequel l'impureté est concentrée, les moyens de vaporisation étant disposés en partie inférieure de la capacité (3) et comprenant une surface de chauffage apte à vaporiser le liquide cryogénique, et
• des moyens de détermination de la teneur en l'impureté du liquide cryogénique résiduel,
le système de détermination (2) étant **caractérisé en ce que** les moyens de vaporisation (84) comprennent au moins un conduit d'admission (42) du liquide cryogénique et une pluralité de conduits d'évacuation (44) du liquide cryogénique, les moyens de vaporisation (84) étant aptes à produire un effet thermosiphon entre le conduit d'admission (42) et la pluralité de conduits d'évacuation (44), la surface de chauffage comprenant les surfaces internes des conduits d'évacuation (44).

2. Système de détermination (2) de la teneur en au moins une impureté dissoute dans un liquide cryogénique selon la revendication 1, dans lequel les conduits d'évacuation (44) entourent le conduit d'admission (42).

3. Système de détermination (2) de la teneur en au moins une impureté dissoute dans un liquide cryogénique selon la revendication 1 ou 2, dans lequel les conduits d'évacuation (44) sont de plus petit diamètre que le conduit d'admission (42).

4. Système de détermination (2) de la teneur en au moins une impureté dissoute dans un liquide cryogénique selon l'une quelconque des revendications 1 à 3, dans lequel les moyens de vaporisation (84) comportent un corps (4) thermiquement conducteur en forme globale de cylindre évidé dans sa hauteur (H) par les conduits d'admission (42) et d'évacuation (44), qui débouchent sur une face (46) du corps (4) délimitant une partie basse de la capacité (3).

5. Système de détermination (2) de la teneur en au moins une impureté dissoute dans un liquide cryogénique la revendication 4, dans lequel le corps (4) comporte une chemise (47) thermiquement isolante disposée entre le conduit d'admission (42) et les conduits d'évacuation (44).

6. Système de détermination (2) de la teneur en au moins une impureté dissoute dans un liquide cryogénique selon la revendication 4 ou 5, dans lequel les moyens de vaporisation comprennent au moins un organe de chauffage électrique disposé dans un évidement du corps (4) proximal aux conduits d'évacuation (44).

7. Système de détermination (2) de la teneur en au moins une impureté dissoute dans un liquide cryogénique selon la revendication 6, dans lequel les moyens de vaporisation (84) comprennent plusieurs organes de chauffage électrique sous forme de cartouches chauffantes, le corps (4) comportant des espaces (41) disposés autour des conduits d'évacuation (44) et logeant les cartouches chauffantes, les espaces (41) étant non débouchant sur la face (46) du corps (4) délimitant la partie basse de la capacité (3).

8. Système de détermination (2) de la teneur en au moins une impureté dissoute dans un liquide cryogénique selon la revendication 7, dans lequel les espaces (41) sont séparés par des évidements (45) sur la circonférence du corps (4), sur au moins une partie de la hauteur (H) du corps (4).

9. Système de détermination (2) de la teneur en au moins une impureté dissoute dans un liquide cryogénique selon l'une quelconque des revendications 4 à 8, dans lequel le corps (4) comporte une face opposée (48) à la face (46) délimitant la partie basse de la capacité (3) et les moyens de vaporisation (84) comprennent un collecteur (8) disposé sur la face opposée (48), le collecteur (8) reliant fluidiquement le conduit d'admission (42) avec les conduits d'évacuation (44).

10. Système de détermination (2) de la teneur en au moins une impureté dissoute dans un liquide cryogénique selon l'une quelconque des revendications 1 à 9, dans lequel une enveloppe (5) entoure les moyens de vaporisation (84), l'enveloppe (5) étant configurée pour contenir un liquide de refroidissement venant au contact des moyens de vaporisation (84).

11. Système de détermination (2) de la teneur en au moins une impureté dissoute dans un liquide cryogénique selon les revendications 9 et 10, dans lequel la face opposée (48) débouche hors de l'enveloppe (5), les conduits d'admission (42) et d'évacuation (44) s'étendant depuis la face (46) délimitant la partie basse de la capacité (3), au travers de l'enveloppe (5).

12. Système de détermination (2) de la teneur en au moins une impureté dissoute dans un liquide cryogénique selon la revendication 11 prise dans la dépendance de la revendication 7 ou 8, dans lequel la face opposée (48) comporte des orifices d'insertion des cartouches chauffantes dans les espaces (41).

13. Système de séparation des gaz de l'air par distillation cryogénique comportant un système de détermination (2) de la teneur en au moins une impureté dissoute dans un liquide cryogénique selon l'une quelconque des revendications 1 à 12, des moyens de prélèvement de fluide circulant dans le système de séparation, des moyens de liquéfaction du fluide prélevé si celui-ci est gazeux, et des moyens d'envoi du fluide prélevé éventuellement liquéfié, dans la capacité (3) pour déterminer sa teneur en l'impureté.

14. Procédé de détermination (100, 200) de la teneur en au moins une impureté dissoute dans un liquide cryogénique, l'au moins une impureté étant moins volatile que le liquide cryogénique, utilisant le système de détermination (2) de la teneur en au moins une impureté selon l'une quelconque des revendications 1 à 12 et comportant des étapes de :
• remplissage (110, 210) de la capacité (3) avec le volume initial de liquide cryogénique, maintenu à une pression et une température de remplissage interdisant une vaporisation du liquide cryogénique lors de cette étape de remplissage (110, 210),
• vaporisation (120, 220) du liquide cryogénique jusqu'à obtention du volume de liquide cryogénique résiduel par les moyens de vaporisation amenant le liquide cryogénique à sa température de vaporisation à la pression du liquide cryogénique lors de cette étape de vaporisation (120, 220), cette pression étant inférieure ou égale à la pression de remplissage, le gaz issu de la vaporisation étant évacué de la capacité (3), et
• détermination de la teneur en l'impureté (130, 230) dans le liquide cryogénique résiduel.

15. Procédé de détermination (100, 200) de la teneur en au moins une impureté dissoute dans un liquide cryogénique selon la revendication précédente, dans lequel la pression au sein de la capacité (3) pendant l'étape de vaporisation (120, 220) est amenée jusqu'à une valeur comprise entre 0,2 bars et 0,3 bars et préférentiellement égale à 0,2 bars.

16. Procédé de détermination (100, 200) de la teneur en au moins une impureté dissoute dans un liquide cryogénique selon la revendication 14 ou 15, dans lequel l'étape de détermination (230, 130) comporte un prélèvement (232) du liquide cryogénique résiduel puis la vaporisation (234) du liquide prélevé en un gaz, ou bien la vaporisation (132) de tout le liquide cryogénique résiduel en un gaz, puis l'envoi (236, 134) du gaz obtenu par vaporisation du liquide prélevé ou de tout le liquide cryogénique résiduel, dans un analyseur de gaz.

17. Procédé de détermination (100, 200) de la teneur en au moins une impureté dissoute dans un liquide cryogénique selon la revendication 16, utilisant un système de détermination (2) selon l'une quelconque des revendications 10 à 12, comportant une étape de vidange (240, 140) de la capacité (3), suivie d'une étape de refroidissement (250, 150) de la capacité (3) par introduction dans l'enveloppe (5) du système de détermination (2), d'un liquide à une température inférieure ou égale à la température de remplissage du liquide cryogénique.

## Patentansprüche

1. Ein System (2) zur Bestimmung des Gehalts an mindestens einer in einer kryogenen Flüssigkeit gelösten Verunreinigung, wobei die mindestens eine Verunreinigung weniger flüchtig ist als die kryogene Flüssigkeit, umfassend:
• einen Behälter (3), der geeignet ist, ein Anfangsvolumen der kryogenen Flüssigkeit aufzunehmen,
• Verdampfungsmittel (84) zum Verdampfen des Anfangsvolumens der kryogenen Flüssigkeit, bis ein Restvolumen der kryogenen Flüssigkeit erhalten wird, in dem die Verunreinigung konzentriert ist, wobei die Verdampfungsmittel im unteren Teil des Behälters (3) angeordnet sind und eine Heizfläche umfassen, die zur Verdampfung der kryogenen Flüssigkeit geeignet ist, und
• Bestimmungsmittel zur Bestimmung des Gehalts der Verunreinigung in der kryogenen Restflüssigkeit,
wobei das Bestimmungssystem (2) **dadurch gekennzeichnet ist, dass** die Verdampfungsmittel (84) mindestens eine Zulaufleitung (42) für die kryogene Flüssigkeit und eine Vielzahl von Ableitungsleitungen (44) für die kryogene Flüssigkeit umfassen, wobei die Verdampfungsmittel (84) geeignet sind, einen Thermosiphon-Effekt zwischen der Zulaufleitung (42) und der Vielzahl von Ableitungsleitungen (44) zu erzeugen, wobei die Heizfläche die Innenflächen der Ableitungsleitungen (44) umfasst.

2. Das Bestimmungssystem (2) zur Bestimmung des Gehalts an mindestens einer in einer kryogenen Flüssigkeit gelösten Verunreinigung nach Anspruch 1, wobei die Ableitungsleitungen (44) die Zulaufleitung (42) umgeben.

3. Das Bestimmungssystem (2) zur Bestimmung des Gehalts an mindestens einer in einer kryogenen Flüssigkeit gelösten Verunreinigung nach Anspruch 1 oder 2, wobei die Ableitungsleitungen (44) einen kleineren Durchmesser als die Zulaufleitung (42) aufweisen.

4. Das Bestimmungssystem (2) zur Bestimmung des Gehalts an mindestens einer in einer kryogenen Flüssigkeit gelösten Verunreinigung nach einem der Ansprüche 1 bis 3, wobei die Verdampfungsmittel (84) einen wärmeleitenden Körper (4) in der Gesamtform eines Zylinders umfassen, der in seiner Höhe (H) durch die Zulaufleitungen (42) und die Ableitungsleitungen (44) ausgehöhlt ist und auf einer Fläche (46) des Körpers (4) münden, die einen unteren Teil des Behälters (3) begrenzt.

5. Das Bestimmungssystem (2) zur Bestimmung des Gehalts an mindestens einer in einer kryogenen Flüssigkeit gelösten Verunreinigung nach Anspruch 4, wobei der Körper (4) eine thermisch isolierende Hülle (47) umfasst, die zwischen der Zulaufleitung (42) und den Ableitungsleitungen (44) angeordnet ist.

6. Das Bestimmungssystem (2) zur Bestimmung des Gehalts an mindestens einer in einer kryogenen Flüssigkeit gelösten Verunreinigung nach Anspruch 4 oder 5, wobei die Verdampfungsmittel mindestens ein elektrisches Heizelement umfassen, das in einer Aussparung des Körpers (4) proximal zu den Ableitungsleitungen (44) angeordnet ist.

7. Das Bestimmungssystem (2) zur Bestimmung des Gehalts an mindestens einer in einer kryogenen Flüssigkeit gelösten Verunreinigung nach Anspruch 6, wobei die Verdampfungsmittel (84) mehrere elektrische Heizelemente in Form von Heizpatronen umfassen, wobei der Körper (4) Räume (41) aufweist, die um die Ableitungsleitungen (44) herum angeordnet sind und die Heizpatronen aufnehmen, wobei die Räume (41) nicht auf die Fläche (46) des Körpers (4) münden, die den unteren Teil des Behälters (3) begrenzt.

8. Das Bestimmungssystem (2) zur Bestimmung des Gehalts an mindestens einer in einer kryogenen Flüssigkeit gelösten Verunreinigung nach Anspruch 7, wobei die Räume (41) durch Ausnehmungen (45) am Umfang des Körpers (4) über mindestens einen Teil der Höhe (H) des Körpers (4) getrennt sind.

9. Das Bestimmungssystem (2) zur Bestimmung des Gehalts an mindestens einer in einer kryogenen Flüssigkeit gelösten Verunreinigung nach einem der Ansprüche 4 bis 8, wobei der Körper (4) eine Fläche (48) aufweist, die der Fläche (46) gegenüberliegt, die den unteren Teil des Behälters (3) begrenzt, und die Verdampfungsmittel (84) einen auf der gegenüberliegenden Fläche (48) angeordneten Kollektor (8) umfassen, wobei der Kollektor (8) die Zulaufleitung (42) fluidisch mit den Ableitungsleitungen (44) verbindet.

10. Das Bestimmungssystem (2) zur Bestimmung des Gehalts an mindestens einer in einer kryogenen Flüssigkeit gelösten Verunreinigung nach einem der Ansprüche 1 bis 9, wobei eine Hülle (5) die Verdampfungsmittel (84) umgibt, wobei die Hülle (5) so konfiguriert ist, dass sie eine Kühlflüssigkeit enthält, die mit den Verdampfungsmitteln (84) in Kontakt kommt.

11. Das Bestimmungssystem (2) zur Bestimmung des Gehalts an mindestens einer in einer kryogenen Flüssigkeit gelösten Verunreinigung nach Anspruch 9 und 10, wobei die gegenüberliegende Fläche (48) aus der Hülle (5) herausragt, wobei sich die Zulaufleitungen (42) und Ableitungsleitungen (44) von der Fläche (46), die den unteren Teil des Behälters (3) begrenzt, durch die Hülle (5) erstrecken.

12. Das Bestimmungssystem (2) zur Bestimmung des Gehalts an mindestens einer in einer kryogenen Flüssigkeit gelösten Verunreinigung nach Anspruch 11, abhängig von Anspruch 7 oder 8, wobei die gegenüberliegende Fläche (48) Einführöffnungen für die Heizpatronen in die Räume (41) aufweist.

13. Ein System zur kryogenen Destillationsabtrennung von Luftgasen, umfassend ein System (2) zur Bestimmung des Gehalts an mindestens einer in einer kryogenen Flüssigkeit gelösten Verunreinigung nach einem der Ansprüche 1 bis 12, Mittel zur Entnahme von im Abscheidesystem zirkulierendem Fluid, Mittel zur Verflüssigung des entnommenen Fluids, falls es gasförmig ist, und Mittel zum Einspeisen des entnommenen, gegebenenfalls verflüssigten Fluids in den Behälter (3) zur Bestimmung seines Gehalts an der Verunreinigung.

14. Ein Verfahren (100, 200) zur Bestimmung des Gehalts an mindestens einer in einer kryogenen Flüssigkeit gelösten Verunreinigung, wobei die mindestens eine Verunreinigung weniger flüchtig ist als die kryogene Flüssigkeit, unter Verwendung des Bestimmungssystems (2) zur Bestimmung des Gehalts an mindestens einer Verunreinigung nach einem der Ansprüche 1 bis 12, und umfassend die Schritte:
• Befüllen (110, 210) des Behälters (3) mit dem Anfangsvolumen der kryogenen Flüssigkeit, gehalten bei einem Druck und einer Befüllungstemperatur, die eine Verdampfung der kryogenen Flüssigkeit während dieses Befüllungsschritts (110, 210) ausschließen,
• Verdampfen (120, 220) der kryogenen Flüssigkeit, bis das Restvolumen der kryogenen Flüssigkeit erhalten wird, durch die Verdampfungsmittel, die die kryogene Flüssigkeit auf ihre Verdampfungstemperatur bei dem Druck der kryogenen Flüssigkeit während dieses Verdampfungsschritts (120, 220) bringen, wobei dieser Druck kleiner oder gleich dem Befüllungsdruck ist, wobei das aus der Verdampfung stammende Gas aus dem Behälter (3) abgeführt wird, und
• Bestimmung des Gehalts der Verunreinigung (130, 230) in der kryogenen Restflüssigkeit.

15. Das Verfahren (100, 200) zur Bestimmung des Gehalts an mindestens einer in einer kryogenen Flüssigkeit gelösten Verunreinigung nach Anspruch 14, wobei der Druck innerhalb des Behälters (3) während des Verdampfungsschritts (120, 220) auf einen Wert zwischen 0,2 bar und 0,3 bar und vorzugsweise gleich 0,2 bar gebracht wird.

16. Das Verfahren (100, 200) zur Bestimmung des Gehalts an mindestens einer in einer kryogenen Flüssigkeit gelösten Verunreinigung nach Anspruch 14 oder 15, wobei der Bestimmungsschritt (230, 130) eine Entnahme (232) der kryogenen Restflüssigkeit und anschließende Verdampfung (234) der entnommenen Flüssigkeit zu einem Gas umfasst, oder alternativ die Verdampfung (132) der gesamten kryogenen Restflüssigkeit zu einem Gas, gefolgt von der Einspeisung (236, 134) des durch Verdampfung der entnommenen Flüssigkeit oder der gesamten kryogenen Restflüssigkeit erhaltenen Gases in einen Gasanalysator.

17. Das Verfahren (100, 200) zur Bestimmung des Gehalts an mindestens einer in einer kryogenen Flüssigkeit gelösten Verunreinigung nach Anspruch 16, unter Verwendung eines Bestimmungssystems (2) nach einem der Ansprüche 10 bis 12, umfassend einen Schritt des Entleerens (240, 140) des Behälters (3), gefolgt von einem Schritt des Kühlens (250, 150) des Behälters (3) durch Einleiten einer Flüssigkeit in die Hülle (5) des Bestimmungssystems (2) bei einer Temperatur, die kleiner oder gleich der Befüllungstemperatur der kryogenen Flüssigkeit ist.

## Claims

1. A system (2) for determining the content of at least one impurity dissolved in a cryogenic liquid, the at least one impurity being less volatile than the cryogenic liquid, comprising:
• a capacity (3) adapted to receive an initial volume of the cryogenic liquid,
• vaporization means (84) for vaporizing the initial volume of cryogenic liquid until a residual volume of cryogenic liquid is obtained, in which the impurity is concentrated, the vaporization means being arranged in the lower part of the capacity (3) and comprising a heating surface adapted to vaporize the cryogenic liquid, and
• determination means for determining the content of the impurity in the residual cryogenic liquid,
the determination system (2) being **characterized in that** the vaporization means (84) comprise at least one admission conduit (42) for the cryogenic liquid and a plurality of evacuation conduits (44) for the cryogenic liquid, the vaporization means (84) being adapted to produce a thermosiphon effect between the admission conduit (42) and the plurality of evacuation conduits (44), the heating surface comprising the internal surfaces of the evacuation conduits (44).

2. The determination system (2) of the content of at least one impurity dissolved in a cryogenic liquid according to claim 1, wherein the evacuation conduits (44) surround the admission conduit (42).

3. The determination system (2) of the content of at least one impurity dissolved in a cryogenic liquid according to claim 1 or 2, wherein the evacuation conduits (44) are of smaller diameter than the admission conduit (42).

4. The determination system (2) of the content of at least one impurity dissolved in a cryogenic liquid according to any one of claims 1 to 3, wherein the vaporization means (84) comprise a thermally conductive body (4) in the overall shape of a cylinder hollowed out in its height (H) by the admission conduits (42) and evacuation conduits (44), which open onto a face (46) of the body (4) delimiting a lower part of the capacity (3).

5. The determination system (2) of the content of at least one impurity dissolved in a cryogenic liquid according to claim 4, wherein the body (4) comprises a thermally insulating jacket (47) disposed between the admission conduit (42) and the evacuation conduits (44).

6. The determination system (2) of the content of at least one impurity dissolved in a cryogenic liquid according to claim 4 or 5, wherein the vaporization means comprise at least one electric heating element disposed in a recess of the body (4) proximal to the evacuation conduits (44).

7. The determination system (2) of the content of at least one impurity dissolved in a cryogenic liquid according to claim 6, wherein the vaporization means (84) comprise several electric heating elements in the form of heating cartridges, the body (4) comprising spaces (41) arranged around the evacuation conduits (44) and housing the heating cartridges, the spaces (41) not opening onto the face (46) of the body (4) delimiting the lower part of the capacity (3).

8. The determination system (2) of the content of at least one impurity dissolved in a cryogenic liquid according to claim 7, wherein the spaces (41) are separated by recesses (45) on the circumference of the body (4), over at least part of the height (H) of the body (4).

9. The determination system (2) of the content of at least one impurity dissolved in a cryogenic liquid according to any one of claims 4 to 8, wherein the body (4) comprises a face (48) opposite to the face (46) delimiting the lower part of the capacity (3) and the vaporization means (84) comprise a collector (8) disposed on the opposite face (48), the collector (8) fluidically connecting the admission conduit (42) with the evacuation conduits (44).

10. The determination system (2) of the content of at least one impurity dissolved in a cryogenic liquid according to any one of claims 1 to 9, wherein an envelope (5) surrounds the vaporization means (84), the envelope (5) being configured to contain a cooling liquid coming into contact with the vaporization means (84).

11. The determination system (2) of the content of at least one impurity dissolved in a cryogenic liquid according to claims 9 and 10, wherein the opposite face (48) opens out of the envelope (5), the admission conduits (42) and evacuation conduits (44) extending from the face (46) delimiting the lower part of the capacity (3), through the envelope (5).

12. The determination system (2) of the content of at least one impurity dissolved in a cryogenic liquid according to claim 11 depending on claim 7 or 8, wherein the opposite face (48) comprises insertion orifices for the heating cartridges in the spaces (41).

13. A system for the cryogenic distillation separation of air gases, comprising a system (2) for determining the content of at least one impurity dissolved in a cryogenic liquid according to any one of claims 1 to 12, means for sampling fluid circulating in the separation system, means for liquefying the sampled fluid if it is gaseous, and means for sending the sampled fluid, optionally liquefied, into the capacity (3) to determine its content of the impurity.

14. A method (100, 200) for determining the content of at least one impurity dissolved in a cryogenic liquid, the at least one impurity being less volatile than the cryogenic liquid, using the determination system (2) of the content of at least one impurity according to any one of claims 1 to 12 and comprising the steps of:
• filling (110, 210) the capacity (3) with the initial volume of cryogenic liquid, maintained at a pressure and a filling temperature prohibiting vaporization of the cryogenic liquid during this filling step (110, 210),
• vaporizing (120, 220) the cryogenic liquid until the residual volume of cryogenic liquid is obtained by the vaporization means bringing the cryogenic liquid to its vaporization temperature at the pressure of the cryogenic liquid during this vaporization step (120, 220), this pressure being less than or equal to the filling pressure, the gas resulting from the vaporization being evacuated from the capacity (3), and
• determining the content of the impurity (130, 230) in the residual cryogenic liquid.

15. The method (100, 200) for determining the content of at least one impurity dissolved in a cryogenic liquid according to claim 14, wherein the pressure within the capacity (3) during the vaporization step (120, 220) is brought up to a value comprised between 0.2 bars and 0.3 bars and preferably equal to 0.2 bars.

16. The method (100, 200) for determining the content of at least one impurity dissolved in a cryogenic liquid according to claim 14 or 15, wherein the determination step (230, 130) comprises sampling (232) the residual cryogenic liquid followed by vaporization (234) of the sampled liquid into a gas, or alternatively vaporization (132) of all of the residual cryogenic liquid into a gas, followed by sending (236, 134) the gas obtained by vaporization of the sampled liquid or all of the residual cryogenic liquid, into a gas analyzer.

17. The method (100, 200) for determining the content of at least one impurity dissolved in a cryogenic liquid according to claim 16, using a determination system (2) according to any one of claims 10 to 12, comprising a step of emptying (240, 140) the capacity (3), followed by a step of cooling (250, 150) the capacity (3) by introducing a liquid into the envelope (5) of the determination system (2), at a temperature less than or equal to the filling temperature of the cryogenic liquid.
